# EUROPEAN PATENT APPLICATION

(11) **EP 4 614 706 A1**
(43) Date of publication of application: **10.09.2025**
(21) Application number: 24162172.1
(22) Date of filing: 07.03.2024
(51) Int. Cl.: H01M 50/291, H01M 10/04, H01M 50/209, H01M 50/249, H01M 50/258

(54) **BATTERY SYSTEM AND METHOD OF ASSEMBLY AND METHOD OF DISASSEMBLY THE BATTERY SYSTEM**

(71) Applicant: Samsung SDI Co., Ltd., Yongin-si, Gyeonggi-do 17084 (KR)
(72) Inventor: Stacherl, Simon, 4522 Sierning (AT); Haring, Fritz, 8600 Bruck / Mur (AT)
(74) Representative: Gulde & Partner

(57) **Abstract**

The present invention refers to a battery system and methods of assembly/disassembly thereof. A first battery module (20) and a second battery module (20') is inserted in a housing (10), wherein the first battery module (20) and the second battery module (20') each include a plurality of battery cells (22, 22'). The first battery module (20) includes a first spanner plate (30) and the second battery module (20') includes a second spanner plate (30') on at least one among a plurality of side portions of the battery modules (20, 20'), wherein the first battery module (20) and the second battery module (20') are arranged so that the first spanner plate (30) and the second spanner plate (30') form an interface (70) between each other. The first spanner plate (30) and the second spanner plate (30') respectively include at least one vertically extending depression (35, 35') facing each other to form at least one common accommodation space (50-1, 50-2), wherein in the at least one common accommodation space (50-1, 50-2) a rotation spanner member (60-1, 60-2) is positioned extending vertically in the respective common accommodation space (50-1, 50-2), wherein a cross section (62) of the rotation spanner member (60-1, 60-2) includes an elongation in an elongation direction (ED). The rotation spanner member (60-1, 60-2) is oriented such that the elongation direction (ED) of the cross section (62) is perpendicular to the interface (70).

## Description

### Field of the Disclosure

The present disclosure relates to a battery system. In addition, the present disclosure relates to a method of assembling and disassembling the battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of an electric motor and conventional combustion engine. Generally, an electric-vehicle battery, EVB, or traction battery is a battery used to power the propulsion of battery electric vehicles, BEVs. Electric-vehicle batteries differ from starting, lighting, and ignition batteries because they are designed to provide power for sustained periods of time. A rechargeable (or secondary) battery differs from a primary battery in that it is designed to be repeatedly charged and discharged, while the latter is designed to provide an irreversible conversion of chemical to electrical energy. Low-capacity rechargeable batteries are used as power supplies for small electronic devices, such as cellular phones, notebook computers and camcorders, while high-capacity rechargeable batteries are used as power supplies for electric and hybrid vehicles and the like.

Rechargeable batteries may be used as battery modules formed of a plurality of unit battery cells electrically connected together in series and/or in parallel so as to provide a high density, such as for motor driving of a hybrid vehicle. For example, the battery module may be formed by interconnecting the electrode terminals of the plurality of unit battery cells in an arrangement or configuration depending on a desired amount of power and in order to realize a high-power rechargeable battery.

Battery modules can be constructed either in a block design or in a modular design. In the block design, each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected together in series to provide a desired voltage. The battery modules may include submodules with a plurality of stacked battery cells and each stack includes cells connected in parallel that are, in turn connected in series (*XpYs*) or cells connected in series that are, in turn connected in parallel (*XsYp*)*.*

A battery pack is a set of any number of (usually identical) battery modules. The battery modules may be configured in a series, parallel or a mixture of both to deliver the desired voltage, capacity, or power density. Components of battery packs include the individual battery modules, and the interconnects, which provide electrical conductivity between them.

The mechanical integration of such a battery pack incorporates suitable mechanical connections between the individual components, for examples, battery modules, and between them and a supporting structure of the vehicle. These connections are designed to remain functional and save throughout the average service life of the battery system. Further, installation space and interchangeability standards must be met, especially in mobile applications.

Mechanical integration of battery modules may be achieved by providing a carrier framework and by positioning the battery modules thereon. Fixing the battery cells or battery modules may be achieved by using fitted depressions in the framework or by mechanical interconnectors such as bolts or screws. In other example, the battery modules are confined by fastening side plates to lateral sides of the carrier framework. Moreover, cover plates may be fixed atop and below the battery modules.

The carrier framework of the battery pack is mounted to a carrying structure of the vehicle. When the battery pack is fixed at the bottom of the vehicle, the mechanical connection may be established from the bottom side by for example bolts passing through the carrier framework of the battery pack. The framework is generally made of aluminum or an aluminum alloy to lower the total weight of the construction.

Battery systems according to the prior art, despite any modular structure, usually include a battery housing that serves as an enclosure to seal the battery system against the environment and provides structural protection of the battery system's components. Housed battery systems are usually mounted as a whole into their application environment, for example, an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery system.

At the contact surface between a battery module including a cell stack and a housing in which the battery module is inserted a machining is required to ensure a compensation of tolerances. Additionally, a press-fit with the housing is usually used to reach contact over the whole surface to have homogenous contact area during cell swelling.

Further, to prevent a thermal runaway, a spacer can be provided which separates the cell stack into two groups to avoid setting the second group on fire. However, the present solutions require expensive machining costs and complicated press during assembling is needed. In addition, the spacer according to the prior art is a loss of space.

The prior arts aim to improve independently from one another the press-fitting for mechanical stability and the spacing for providing a thermal barrier.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided. The battery system includes a first battery module and a second battery module inserted in a housing. The first battery module and the second battery module each include a plurality of battery cells. The first battery module includes a first spanner plate and the second battery module includes a second spanner plate on at least one among a plurality of side portions of the battery modules. The first battery module and the second battery module are arranged so that the first spanner plate and the second spanner plate face each other. The first spanner plate and the second spanner plate are formed to respectively include at least one vertically extending depression which face each other to form at least one common accommodation space. In the at least one common accommodation space a rotation spanner member is positioned which is formed to vertically extend in the respective common accommodation space, wherein a cross section of the rotation spanner member has an elongation in an elongation direction. The rotation spanner member is oriented such that the elongation direction of the cross section is perpendicular to the interface.

According to another aspect of the present disclosure, a method of assembling a battery system is provided, wherein the method includes the following steps: The method includes the step of inserting a first battery module and a second battery module into a housing, wherein the first battery module and the second battery module each include a plurality of battery cells. The method the first battery module includes a first spanner plate and the second battery module includes a second spanner plate on at least one among a plurality of side portions of the battery modules, wherein the first battery module and the second battery module are arranged so that the first spanner plate and the second spanner plate face each other. The first spanner plate and the second spanner plate are formed to respectively include at least one vertically extending depression facing each other to form at least one common accommodation space. The method includes the step providing a rotation spanner member in the respective common accommodation space, wherein a cross section of the rotation spanner member has an elongation in an elongation direction, such that the elongation direction of the cross section is perpendicular to an interface between the first and second battery module. The method further includes the step of rotating at least one rotation spanner member into a state where the elongation direction of the cross section is perpendicular to the interface to exert an elastic pressing force onto the first and second battery module to press-fit the first and second battery module in the housing.

Yet another aspect of the present disclosure refers to a method of disassembling the battery system. The method includes the step of providing a battery system as defined above. The method further includes the step of rotating the at least one rotation spanner member so that the elongation direction is parallel to the interface. The method further includes the step of removing the at least one rotation spanner member from the respective common accommodation space. The method includes the step of removing at least one among the first battery module and the second battery module from the housing.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: schematically illustrates a perspective view of a battery system according to an embodiment,
- Fig. 2: illustrates an enlarged view of II shown in Fig. 1,
- Fig. 3: schematically illustrates a method of assembling the battery system according to an embodiment,
- Fig. 4: schematically illustrates method steps according to the method shown in Fig. 3,
- Fig. 5: schematically illustrates method steps according to the method shown in Fig. 3,
- Fig. 6: schematically illustrates a method of disassembling the battery system according to an embodiment,
- Fig. 7: schematically illustrates method steps according to the method shown in Fig. 6.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity. Further, the use of "may" when describing embodiments of the present disclosure refers to "one or more embodiments of the present disclosure

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof. It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto. Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a first battery module and a second battery module inserted in a housing. The first battery module and the second battery module each include a plurality of battery cells. The first battery module includes a first spanner plate and the second battery module includes a second spanner plate on at least one among a plurality of side portions of the respective battery module. The first spanner plate and the second spanner plate are positioned to face each other. The first spanner plate and the second spanner plate are formed to respectively include at least one vertically extending depression which face each other to form at least one common accommodation space. In the at least one accommodation space a rotation spanner member is positioned which is formed to vertically extend in the respective accommodation space, wherein a cross section of the rotation spanner member has an elongation in an elongation direction. The rotation spanner member is oriented such that the elongation direction of the cross section is perpendicular to the interface and configured to exert an elastic pressing force onto the first and second battery module to press-fit the first and second battery module in the housing.

In other words, providing a press-fit between the battery modules and the housing may mean pressing against the housing. Further, the term elongated may mean eccentric, i.e. one direction is longer than any other direction. The rotation spanner member may be a hollow body or may be a solid body. The interface may here mean an interface area or an interface plane between the spanner plates. The rotation spanner may also be referred to as a roll spanner member. The rotation spanner indicates that the rotation spanner can be rotated in the accommodation space. The vertically extending may mean that, here the depression, is extending in height direction of the battery module.

The battery system has the advantage that the spanning mechanism and the spacing are provided by the same entity. That is, due to the spanner plates forming an interface between the battery modules, the present battery system provides a thermal barrier between the battery cells of the first and the second battery module and additionally achieve a press-fit in the housing by action of the rotation spanner member including a tolerance compensation. Thus, the spacing, here through the spanning plates, is not a loss of space anymore but works as spanning mechanism to provide the press-fit in the housing. Further expensive machining costs can be saved. In addition, due to the press-fit, tolerances of the battery cells and the housing are compensated by the press-fit. In addition, the battery system can be easily assembled and disassembled by a mere rotation of the rotation spanner member. Thus, complicated press can be avoided and in case of a battery cell being damaged, the battery module can be easily replaced while the rest of the battery system is still be usable. Thus, reusability of the battery system is improved.

According to an embodiment, the cross section is formed to include curved portions between two elongation end portions. This may ease a rotation motion of the rotation spanner member. Thus, the assembly and disassembly processes are eased by providing curved portions of the rotation spanner member.

According to an embodiment, the cross section is formed to be symmetric with respect to the elongation direction. This implies that the assembly and disassembly process can be performed by a rotation in both directions. This allows as well that in case that two rotation spanner members are provided, they can be symmetrically rotated mirror-inverted to avoid shear movement of the battery modules in the assembly or disassembly process. Therefore, the positioning process of the battery modules in the housing can be improved.

According to an embodiment, the elongation end portions are flat and extend perpendicular to the elongation direction. The flat portions have an effect the rotation panner members cannot easily rotate back without this being intended. Therefore, an improved stability of the assembled state of the battery system is provided. In other words, the press-fitted configuration is stabilized due to the flatness property of the cross section of the rotation spanner member.

According to an embodiment, the at least one depression is formed between two protruding portions of the first and second spanner plate, wherein the depression includes a flat portion between the protruding portions. Thus, a homogeneous press contact with the depression can be provided.

According to an embodiment, the flat portion of the depression abuts the flat elongation end portion of the rotation spanner member. Thus, a homogeneous press contact area can be provided which results in an improved contact for the press fit and enhances stability of the press-fitted configuration of the battery system. Abut may mean directly contact or pressing against.

According to an embodiment, the at least one depression is formed between flat plate portions of the respective spanner plate, wherein a depression gap is provided between the at least one depression and a plane defined by the flat plate portions of the respective spanner plate. Thus, in this case, the local thermal conduction across the rotation spanner member and the depression is strongly reduced. Therefore, despite of providing the spanning mechanism between the battery modules, heat transferal is reduced by a configuration which includes the depression gap.

According to an embodiment, the first battery module and the second battery module include a plurality of frame portions, wherein the respective spanner plate forms at least one of the plurality of frame portions. Thus, the spanner plate has an additional function of supporting the battery cells beyond providing the spanning force for the battery modules in the housing and the thermal barrier between the battery cells.

According to an embodiment, at least one among the frame portions include a slit in which a flap of the spanner plate is inserted to couple the spanner plate with the corresponding frame portion. This provides a structure to easily mechanically couple the spanner plate with the frame portions. Therefore, the spanner plate provides an end portion of the battery module having both the role of press-fitting the battery modules in the housing as well as providing stabilization of the battery cells in the battery module itself.

According to an embodiment, the first spanner plate and the second spanner plate are formed to respectively include two vertically extending depressions arranged so to form two common accommodation spaces displaced from each other along the interface. First and second rotation spanner members are respectively positioned in a corresponding accommodation space. This configuration allows for an additional effect which goes beyond the mere sum of the individual effects. In this embodiment, the assembly (and disassembly) process can be improved since by rotating the rotation spanner members in opposite direction, i.e. mirror inverted, a shear movement of the battery modules can be reduced or eliminated. Thus, not only the assembly process is enhanced, but also the press-fit in the housing can be improved when providing the two rotation spanner members.

According to another aspect of the present disclosure, a method of assembling a battery system according to one of the embodiments of the present disclosure, wherein the method includes the following steps: The method includes the step of inserting a first battery module and a second battery module into a housing, wherein the first battery module and the second battery module each include a plurality of battery cells. The method the first battery module includes a first spanner plate and the second battery module includes a second spanner plate on at least one among a plurality of side portions of the battery modules, wherein the first battery module and the second battery module are arranged so that the first spanner plate and the second spanner plate face each other. The first spanner plate and the second spanner plate are formed to respectively include at least one vertically extending depression facing each other to form at least one common accommodation space. The method includes the step inserting a rotation spanner member in the respective accommodation space, wherein a cross section of the rotation spanner member has an elongation in an elongation direction, such that the elongation direction of the cross section is perpendicular to an interface between the first and second battery module. The method further includes the step of rotating at least one rotation spanner member into a state where the elongation direction of the cross section is perpendicular to the interface to exert an elastic pressing force onto the first and second battery module to press-fit the first and second battery module in the housing. The same effects as mentioned above apply here and also apply to the assembly method.

According to an embodiment, the first spanner plate and the second spanner plate are formed to respectively include two vertically extending depressions arranged so to form two common accommodation spaces displaced from each other along the interface; and a first and a second rotation spanner members are respectively positioned in a corresponding accommodation space. The step or rotating includes rotating the first and second rotation spanner member in opposite direction until the elongation direction of the cross section is perpendicular to the interface. In this embodiment, the assembly process can be improved since by rotating the rotation spanner members in opposite direction, i.e. mirror inverted, a shear movement of the battery modules can be reduced or eliminated.

Yet another aspect of the present disclosure refers to a method of disassembling the battery system. The method includes the step of providing a battery system as defined according to the various embodiments as described above. The method further includes the step of rotating the at least one rotation spanner member so that the elongation direction is parallel to the interface. The method includes the step of removing at least one among the first battery module and the second battery module from the housing. Thus, the method allows an easy exchange of defect battery modules or battery cells.

According to another embodiment the step or rotating includes rotating the first and second rotation spanner member in opposite direction. In this embodiment, the disassembly process can be improved since by rotating the rotation spanner members in opposite direction, i.e. mirror inverted, a shear movement of the battery modules can be reduced.

### Specific Embodiments

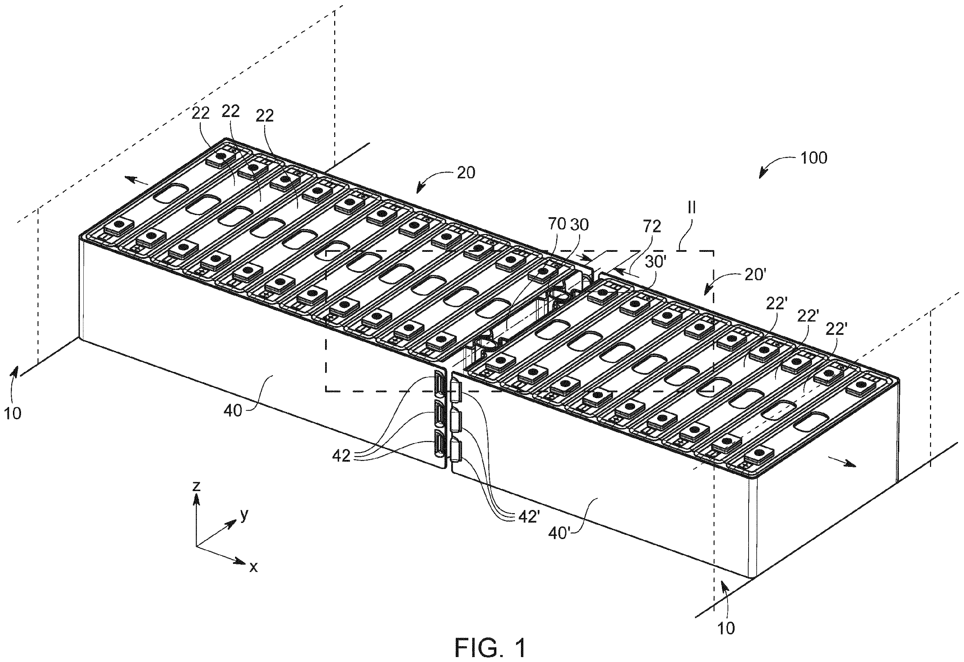

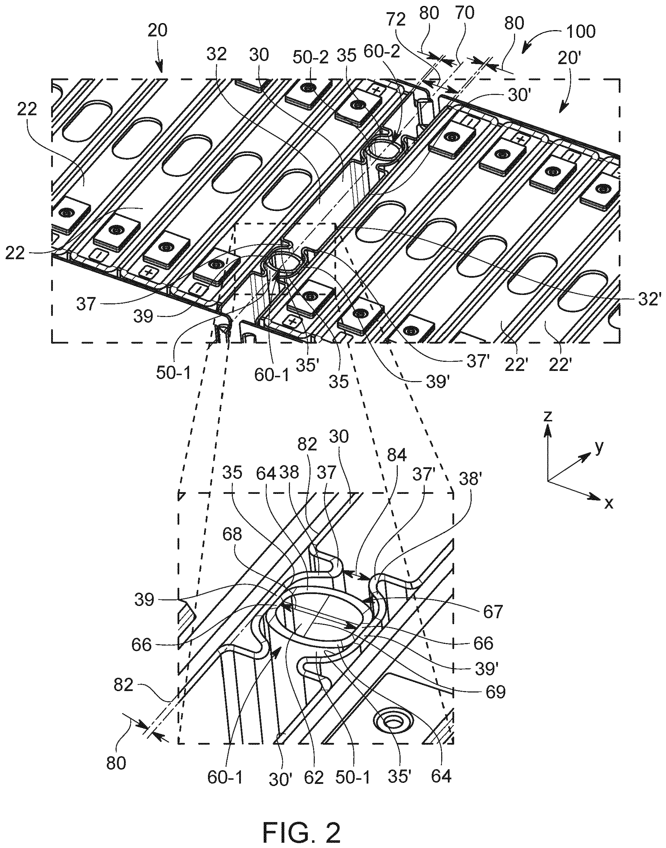

Fig. 1 schematically illustrates a perspective view of a battery system 100 according to an embodiment. In addition, Fig. 2 illustrates an enlarged view of II shown in Fig. 1. In the following, the description refers to both Figs. 1 and 2 for providing a detailed illustration of the present disclosure.

Referring to Figs. 1 and 2, a battery system 100 is provided and described now in detail below. The battery system 100 includes a first battery module 20 and a second battery module 20' as shown in Figs. 1 and 2.

Further, Figs. 1 and 2 show that the first battery module 20 and the second battery module 20' each includes a plurality of battery cells 22, 22'. In the present embodiment, the battery cells 22, 22' are prismatic battery cells. The battery cells 22, 22' are stacked in a lengthwise direction (x-direction in Fig. 1) of the corresponding battery module 20, 20'. However, the disclosure is not restricted thereto and more than one row of battery cells 22, 22' may be provided. In addition, more than two battery modules 20, 20' in the lengthwise direction (x-direction in Fig. 1) may be provided. Further, battery cells 20, 20' having different shape may be used.

The first battery module 20 and the second battery module 20' each include a plurality of frame portions 40, 40'. The frame portions 40, 40' may define an insertion space in which the plurality of battery cells 22, 22' can be pre-assembled, as can be seen in Fig. 1. For example, the respective battery module 20, 20' as described in Fig. 1 include two opposite long side frame portions 40, 40' and two opposite short side frame portions which will be described in more detail further below.

The first battery module 20 and the second battery module 20' are inserted in a housing 10. In the present embodiment, only parts of the housing 10 are shown for illustration. The battery modules 20, 20' are press-fitted in the housing 10 as will be described further below. Fig. 1 is only an embodiment and the present disclosure may include more than two battery modules 20, 20' inserted into the housing 10 in a predefined manner, for example, more than two battery modules 20, 20' in the lengthwise direction (x-direction in Fig. 1) and/or one more additional rows of battery modules.

A spanning mechanism is provided between the battery modules 20, 20' which is described in the following. The first battery module 20 includes a first spanner plate 30 and the second battery module 20' includes a second spanner plate 30'. In the present embodiment, the corresponding spanner plates 30, 30' are formed on one among a plurality of side portions of the battery modules 20, 20'. However, the disclosure may also include embodiments in which the spanner plate 30 is provided on more than one among a plurality of side portions.

The first battery module 20 and the second battery module 20' are positioned relative to each other such that the first spanner plate 30 and the second spanner plate 30' face each other. Thus, in other words, the first spanner plate 30 and the second spanner plate 30' form an interface 70 between each other, as indicated in Fig. 1. Since the interface 70 is formed between the first spanner plate 30 and the second spanner plate 30' of the battery modules 20, 20', a thermal transfer between the first battery module 20 and the second battery module 20' is reduced through the interface 70.

In the embodiment, the first spanner plate 30 and the second spanner plate 30' are spaced from each other from each other by a spanner plate gap 72 as indicated in Figs. 1 and 2. In other word, the spanner plates 30, 30' are spaced form each other with respect to the interface 70. Thus, by providing the spanner plate gap 72, thermal transfer between the battery modules 20, 20' is reduced which diminishes the risk of a thermal runaway spreading across the battery modules 20, 20'.

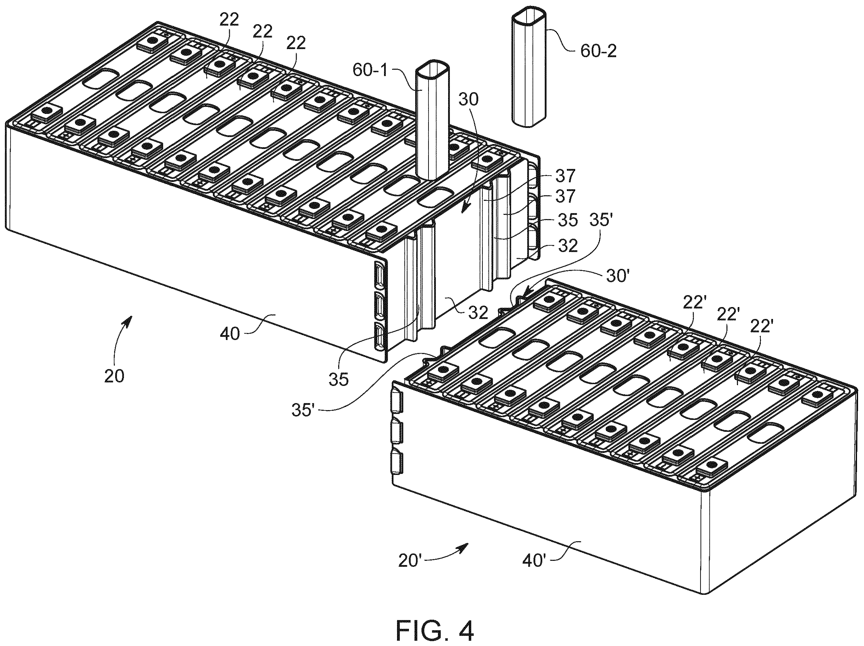

Referring to Fig. 2, the first spanner plate 30 and the second spanner plate 30' are formed to respectively include at least one vertically extending depression 35, 35', i.e., the depression 35, 35' extending in height direction of the battery modules (z-direction in Fig. 2). Thus, the first spanner plate 30 includes at least one vertically extending depression 35 and the second spanner plate 30' includes at least one vertically extending depression 35'. In the present embodiment, as will be referred to further below, each of the first spanner plate 30 and the second spanner plate 30' include two vertically extending depressions as indicated in Figs. 1 and 2. That the depressions 35, 35' vertically extend (here along the z-axis) with respect to the spanner plates 30, 30' is also more clearly illustrated in Fig. 4.

Furthermore, the vertically extending depressions 35, 35' of the two different battery modules 20, 20' are facing each other. Therefore, the opposite depressions 35, 35' are a pair or pairs as indicated in Figs. 1 and 2. Thereby, the vertically extending depressions 35, 35' form at least one common accommodation space 50-1, 50-2. In more detail, in case of that two vertically extending depressions 35, 35' are provided as indicated in Figs. 1 and 2, two accommodation spaces 50-1, 50-2 are formed. Further, in case of that one vertically extending depressions 35, 35' is formed, one accommodation spaces 50-1, 50-2 is formed, e.g. at a center of the facing portions of the battery modules 20, 20'.

Since the depressions 35, 35' extend vertically also the at least one common accommodation space 50-1, 50-2 extends in vertical direction, i.e. in height direction (z-direction). The accommodation spaces 50-1, 50-2 may not be entirely closed in widthwise direction of battery modules 20, 20' as indicated in Fig. 2 but may be at least partially open, i.e. parallel to the interface 70. Thus, an accommodation gap 84 between the first spanner plate 30 and the second spanner plate 30' is provided which increases the barrier of thermal transfer across the interface 70 so to reduce the risk of a spread of thermal runaway.

A rotation spanner member 60-1, 60-2 is positioned in the at least one accommodation space 50-1, 50-2. In the present embodiment, two rotation spanner members 60-1, 60-2 are provided respectively in corresponding accommodation spaces 50-1, 50-2. However, in an embodiment, only one rotation spanner member 60-1 in one common accommodation space 50-1 may be provided.

The rotation spanner member 60-1, 60-2 is formed to vertically extend in the respective accommodation space 50-1, 50-2, i.e., in the height direction. Thus, the rotation spanner member 60-1, 60-2 is shaped to fit into the accommodation space 50-1, 50-2. Referring to Fig. 2, the cross section 62 of the rotation spanner member 60-1, 60-2 is elongated in an elongation direction ED. The rotation spanner member 60-1, 60-2 is here hollow to reduce weight but the invention is not restricted thereto and the rotation spanner member 60-1, 60-2 may also be solid.

As can be seen in Fig. 2, the rotation spanner member 60-1, 60-2 is oriented such that the elongation direction of the cross section 62 is perpendicular to the interface 70, i.e., points across the interface 70 (y-direction) in Fig. 2 of the present disclosure.

The rotation spanner member 60-1, 60-2 is configured to press onto the spanner plates 30, 30' to press on the first and second battery module 20, 20' when the elongation direction of the cross section 62 is oriented to be perpendicular to the interface 70 between the first and second battery module 20, 20'. Thus, since the rotation spanner member 60-1, 60-2 has an elongation 67 in the elongation direction ED, a pressing force can be provided. For the inserted battery modules 20, 20' a press-fit of the first and second battery module 20, 20' in the housing 10 is provided through the rotation spanner member 60-1, 60-2. For example, due to the elongation 67 having an elongation length 68 being larger than a width 69, the rotation spanner member 60-1, 60-2 can caused a displacement of the first and the second battery module 20, 20' away from each other in response to rotating the rotation spanner member 60-1, 60-2 from a parallel orientation to the perpendicular orientation, the latter being shown in Fig. 2. In this manner, a press-fit is generated in the housing 10.

Further, the rotation spanner member 60-1, 60-2 may be configured to exert no pressing force onto the spanner plates 30, 30' when the elongation direction of the cross section 62 is parallel to the interface 70 between the first and second battery module 20, 20'. Thus, due to a mere rotation, a press-fit of the battery modules 30, 30' in the housing 10 can be reached. Thus, the battery modules 20, 20' can be easily obtained by a mere rotation between parallel orientation to the interface 70 and a perpendicular orientation.

Therefore, the battery system 100 includes a spanner mechanism with spanner plates 30, 30' which allows for stably press-fit battery modules 20, 20' in the housing 10 including a tolerance compensation due to the action of the rotation spanner member in the housing 10 while reducing heat transfer between the battery modules 20, 20' to protect against thermal runaway. In addition, as demonstrated above, the battery system 100 can be assembled and disassembled in an easy manner involving a rotation step. Thus, the spacing, here through the spanning plates 30, 30' is not a loss of space anymore but works as spanning mechanism to provide the press-fit in the housing 10.

As can be seen in Fig. 2, the cross section 62 of the rotation spanner member 60-1, 60-2 may have curved portions 64 between two elongation end portions 66. The curved portions 64 may allow to easily rotate the rotation spanner member 60-1, 60-2 in the accommodating space so that the battery system 100 can be easily assembled and disassembled.

In addition, the cross section 62 is formed to be symmetric with respect to the elongation direction allowing that rotations in opposite directions can be performed in the same manner.

Referring to Fig. 2 in detail, the elongation end portions 66 are flat and extend perpendicular to the elongation direction ED. Due to the flat elongation end portions 66, the rotation spanner members 60-1, 60-2 cannot unintentionally rotate back from the pressing orientation perpendicular to the interface 70. Thus, a stability of the press-fit configuration is improved.

Regarding the shape of the depressions, the at least one depression 35, 35' is formed between two protruding portions 37 of the first and second spanner plate 30, 30'. The depression 35, 35' includes a flat portion 39, 39' between the protruding portions 37, 37'. The flat portion 39, 39' of the depression 35, 35' abuts the flat elongation end portion 66 of the rotation spanner member 60-1, 60-2. Thus, a homogenous area contact can be reached to enhance the pressing contact.

Further referring to Fig. 2 (see the larger part), the at least one depression 35, 35' is formed between flat plate portions 32 of the respective spanner plate 30, 30'. The flat plate portions 32 may form the main part of the respective spanner plates 30, 30' on which the depression 35, 35' are formed. A depression gap 80 is formed between at least one depression 35, 35' and a plane 82 defined by the flat plate portions 32 of the respective spanner plate 30, 30'. Thus, as can be seen in Fig. 2, at the contact parts, due to the depression gap 80, thermal transfer in this region is reduced. Thus, despite of providing a mechanical contact, the contact zone is separated from the battery cells, so that heat transfer is reduced in a case of overheating in a battery module 20, 20'.

Referring to Figs. 1 and 2, the first spanner plate 30 and the second spanner plate 30' are formed to respectively include two vertically extending depressions 35, 35'. The depressions 35, 35' are displaced from each other along the interface 70. Thus, two common accommodation spaces 50-1, 50-2 are provided displaced from each other along the interface 70. Thus, the first and the second rotation spanner members 60-1, 60-2 are respectively positioned in a corresponding accommodation space 50-1, 50-2. As will be explained further below, the two rotation spanner members 60-1, 60-2 can be rotated mirror inverted which allows to avoid shear movement of the battery modules 20, 20' in the assembly process. Thus, providing the two rotation spanner members 60-1, 60-2 has in this embodiment a particular technical effect that allows improve the press-fit and the positioning in the housing 10.

Referring again to Fig. 1, the first battery module 20 and the second battery module 20' include a plurality of frame portions 40, 40' as mentioned above. The respective spanner plate 30, 30' forms at least one of the plurality of frame portions 40, 40'. Thus, the spanner plate 30, 30' form an end plate for both the first battery module 20 and the second battery module 20'. Thus, the respective spanner plate 30, 30' has the additional function of mechanically supporting the battery cells 22, 22' in the respective battery module 20, 20'.

In addition, the frame portions 40, 40' include a slit 42, 42' (here three slits). The slits 42, 42' may imbedded in a slit structure. A flap of the spanner plate 30, 30' may be inserted into a corresponding slit 42, 42' to stably couple the spanner plate 30, 30' with the frame portion 40, 40'. Thus, a stable framing of the respective battery modules 20, 20' can be provided despite of having the spanner plates 30, 30' at least one side portion thereof. The slits 42, 42' may be provided in a slit structure in which the slits 42, 42' are embedded.

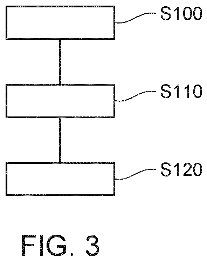

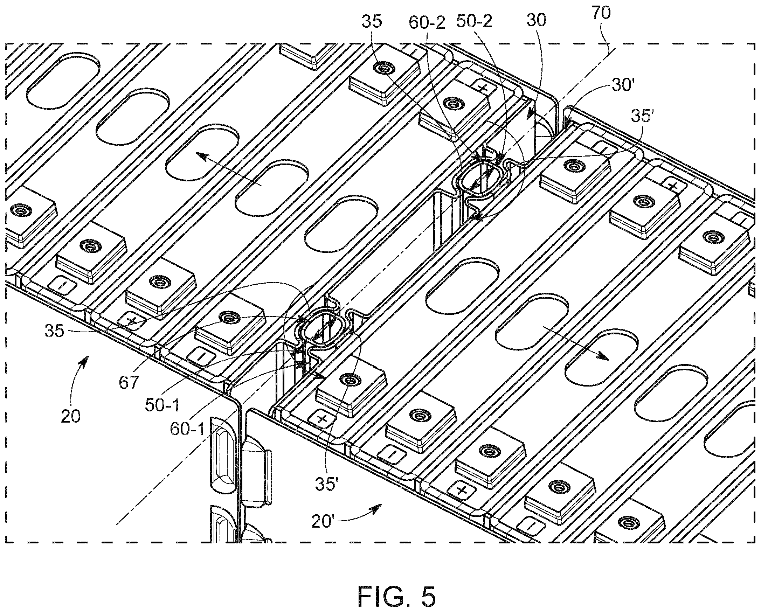

Fig. 3 schematically illustrates a method of assembling the battery system 100 according to an embodiment. The method is further illustrated by referring to Figs. 4 and 5 to illustrate individual steps thereof.

The method of assembling includes the step of inserting S100 a first battery module 20 and a second battery module 20' into a housing 10. The battery modules 20, 20' may be configured according to the above embodiments. For the detailed description of the various features thereof, it is referred to the description regarding Figs. 1 and 2.

The first battery module 20 and the second battery module 20' each include a plurality of battery cells 22, 22' as seen in Fig. 4. Further, as explained above, the first battery module 20 includes a first spanner plate 30 and the second battery module 20' includes a second spanner plate 30' on at least one among a plurality of side portions of the battery modules 20, 20'. This is for example illustrated in Fig. 4. The first battery module 20 and the second battery module 20' are arranged so that the first spanner plate 30 and the second spanner plate 30' face each other. This arrangement can be provided either prior to inserting or can be done during the inserting process.

The first spanner plate 30 and the second spanner plate 30' are formed to respectively include at least one vertically extending depression 35, 35' facing each other. Thus, opposite depressions 35, 35' form at least one common accommodation space 50-1, 50-2 as shown in Fig. 5. Again, the mutual arrangement can be done prior to insertion or in the inserting process.

Further as illustrated in Fig. 4, the method includes the step of providing S110 a rotation spanner member 60-1, 60-2 in a respective accommodation space 50-1, 50-2. Again, also here, the rotation spanner member 60-1, 60-2 may be inserted after the battery modules 20, 20' are inserted in the housing 10. However, the rotation spanner member 60-1, 60-2 may also be provided in the accommodation space 50-1, 50-2 prior to the inserting step. As already explained in detail above and referred to herein, a cross section 62 of the rotation spanner member 60-1, 60-2 has an elongation in an elongation direction ED. The steps S110 and S120 can be done in a simultaneous process.

Initially, the rotation spanner member 60-1, 60-2 is provided in the accommodation space 50-1, 50-2 such that the elongation direction of the cross section 62 is parallel to the interface 70 between the first and second battery module 20, 20'. In this embodiment no spanning force is exerted on the battery modules 20, 20'. In this embodiment, the entire length of the battery modules 20, 20' is minimal since the elongation direction (elongation 67 having the elongation length 68) is directed along the interface 70. This configuration is shown in Fig. 5. In this embodiment, the battery modules 20, 20' may have a tolerance with respect to the housing 10. Thus, in this embodiment, there may be for example a small space between the battery modules 20, 20' (sides thereof) and the housing 10. Assembly tools may be provided to install and insert the components.

As indicated in Fig. 5, the method now includes rotating S120 the at least one rotation spanner member 60-1, 60-2 into a state where the elongation direction (elongation width 67) of the cross section 62 is perpendicular to the interface 70. Then, the rotation spanner member 60-1, 60-2, i.e. the elongation 67 thereof, exerts an elastic pressing force onto the first and second battery module 20, 20'. Thus, by rotating the rotation spanner member 60-1, 60-2 as shown in Fig. 5 according to the arrows, the battery modules 20, 20' are pushed apart from each other (arrows in Fig. 5). Thus, in interaction with the housing 10, a press-fit of the first and second battery module 20, 20' with the housing 10 is provided. As illustrated in Fig. 5 compared to e.g. Fig. 2, a rotation of 90° are required to achieve the maximum displacement of the battery modules 20, 20' resulting in a pressing force of the battery modules 20, 20' in the housing 10. Rotating tools are provided to perform the rotation.

Thus, the rotation spanner member 60-1, 60-2 allow a press-fit to stably support the battery modules 20, 20' in the housing 10 while thermal transfer is reduced due to the interface 70. No machining is required in the presented assembly method so that assembly costs are reduced by the proposed assembly process.

Referring to Fig. 5, the first spanner plate 30 and the second spanner plate 30' are formed to respectively include two vertically extending depressions 35, 35' arranged so to form two common accommodation spaces 50-1, 50-2 separated from each other along the interface 70. Thus, a first and a second rotation spanner members 60-1, 60-2 are respectively positioned in a corresponding accommodation space 50-1, 50-2. In this example, the step of rotating may include rotating the first and second rotation spanner member 60-1, 60-2 in opposite direction. Thus, shear movement of the battery modules 20, 20' can be avoided in the assembly process.

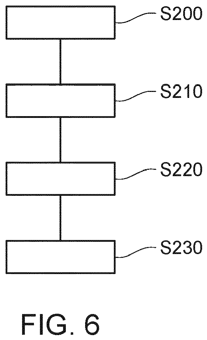

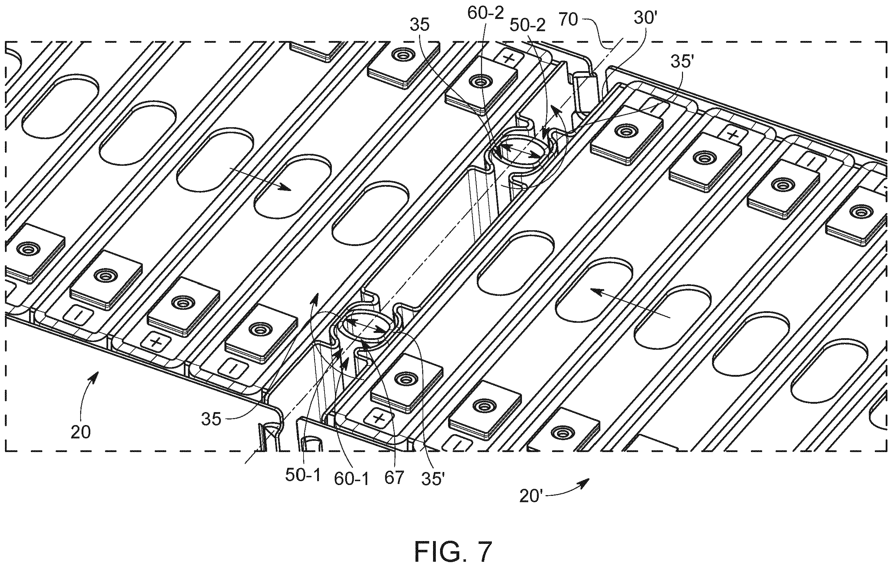

Referring now to Fig. 6, a method of disassembling the battery system 100 is schematically illustrated according to an embodiment. The method is further illustrated in the following by referring to Fig. 7.

The method for disassembling a battery system 100 is initiated with providing S200 a battery system 100 as disclosed in the various embodiments as disclosed with respect to Figs. 1 and 2. Thus, in this stage, the at least one rotation spanner member 60-1, 60-2 is oriented so that the elongation 67 of the cross section is perpendicular to the interface 70 as indicated in Fig. 7, which refers now to the press-fitted configuration.

The disassembling method now further includes the step of rotating S210 the at least one rotation spanner member 60-1, 60-2 so that the elongation direction of an elongation 67 becomes parallel to the interface 70. Thus, in this step, the press-fit caused by the elongation of the cross section is resolved by the rotation process.

And then, the disassembling method further includes the step of removing S220 the at least one rotation spanner member 60-1, 60-2 from the respective accommodation space 50-1, 50-2.

Therefore, in a next step, the method includes removing S230 at least one among the first battery module 20 and the second battery module 20' from the housing 10. Therefore, a defect battery module 20, 20' or a defect battery cell 22, 22' therein can be easily replaced by reversing the assembly steps as described with respect to Fig. 3.

Further, in case of when the first spanner plate 30 and the second spanner plate 30' are formed to respectively include two vertically extending depressions 35, 35' arranged so to form two common accommodation spaces 50-1, 50-2 displaced from each other along the interface 70, a first and a second rotation spanner members 60-1, 60-2 are respectively positioned in a corresponding accommodation space 50-1, 50-2. Then, the step or rotating may include rotating the first and second rotation spanner member 60-1, 60-2 in opposite direction. This may prevent shear movement of the battery modules 20, 20' in the disassembling process. Reusability of the battery system 100 is improved and also the battery system 100 may still be operated even if one batter module is removed. Thus, the maintaining of the battery system 100 is improved.

In summary, a battery system 100 is provided including a spanner mechanism with spanner plates 30, 30' which allow for stably press-fit battery modules 20, 20' in a housing 10 while simultaneously reducing heat transfer between the battery modules 20, 20' to protect against thermal runaway. In addition, the battery system 100 can be assembled and disassembled in an easy manner involving a rotation step reducing the impact on the battery modules 20, 20' reducing manufacturing costs. Thus, the spacing, here through the spanning plates 30, 30', is not a loss of space anymore but works as spanning mechanism to provide the press-fit in the housing 10. Further, an easy replacement of battery cells 22, 22' can be performed while the rest of the battery system 100 is still be usable.

### Reference signs

- 100: battery system

- 10: housing

- 20: first battery module
- 22: battery cells

- 30: first spanner plate
- 32: flat plate portion

- 35: depression
- 37: protruding portion
- 38: curved portion
- 39: flat portion

- 40: frame portion
- 42: slit (structure)

- 20': second battery module
- 22': battery cells

- 30': second spanner plate
- 32': flat plate portion

- 35': depression
- 37': protruding portion
- 38': curved portion
- 39': flat portion
- 40': frame portion
- 42': slit (structure)

- 50-1, 50-2: accommodation space (first/second)
- 60-2, 60-2: rotation spanner member (first/second)

- 62: cross section
- 64: curved portion
- 66: elongation end portion
- 67: elongation
- 68: elongation length
- 69: width

- 70: interface
- 72: spanner plate gap
- 80: depression gap
- 82: plane
- 84: accommodation gap

## Claims

1. A battery system (100), comprising:
a first battery module (20) and a second battery module (20') inserted in a housing (10), wherein the first battery module (20) and the second battery module (20') each comprise a plurality of battery cells (22, 22');
the first battery module (20) comprises a first spanner plate (30) and the second battery module (20') comprises a second spanner plate (30') on at least one among a plurality of side portions of the battery modules (20, 20'), wherein the first battery module (20) and the second battery module (20') are arranged so that the first spanner plate (30) and the second spanner plate (30') form an interface (70) between each other;
the first spanner plate (30) and the second spanner plate (30') respectively comprise at least one depression (35, 35') facing each other to form at least one common accommodation space (50-1, 50-2);
wherein in the at least one common accommodation space (50-1, 50-2) a rotation spanner member (60-1, 60-2) is positioned extending vertically in the respective common accommodation space (50-1, 50-2), wherein a cross section (62) of the rotation spanner member (60-1, 60-2) has an elongation (67) in an elongation direction (ED); and
the rotation spanner member (60-1, 60-2) is oriented such that the elongation direction (ED) of the cross section (62) is perpendicular to the interface (70).

2. The battery system according to claim 1, wherein the cross section (62) is formed to comprise curved portions (64) between two elongation end portions (66).

3. The battery system according to claim 2, wherein the rotation spanner member (60-1, 60-2) is configured to exert an elastic pressing force onto the first and second battery module (20, 20') to press-fit the first and second battery module (20, 20') in the housing (10).

4. The battery system according to any one of the claims 2 to 3, wherein the elongation end portions (66) are flat and extend perpendicular to the elongation direction (ED).

5. The battery system according to any one of the claims 1 to 4, wherein the at least one depression (35, 35') is formed between two protruding portions (37) of the respective spanner plate (30, 30'), wherein the depression (35, 35') comprises a flat portion (39) between the protruding portions (37).

6. The battery system according to claim 5, when dependent on claim 4, wherein the flat portion (39) of the depression (35, 35') abuts the flat elongation end portion (66) of the rotation spanner member (60-1, 60-2).

7. The battery system according to any one of the preceding claims, wherein the at least one depression (35, 35') is formed between flat plate portions (32, 32') of the respective spanner plate (30, 30'), wherein a depression gap (80) is provided between at least one depression (35, 35') and a plane (82) defined by the flat plate portions (32) of the respective spanner plate (30, 30').

8. The battery system according to any one of the preceding claims, wherein the first battery module (20) and the second battery module (20') comprise a plurality of frame portions (40, 40'), wherein the respective spanner plate (30, 30') forms at least one of the plurality of frame portions (40, 40').

9. The battery system according to claim 8, wherein at least one among the frame portions (40, 40') comprise a slit (42, 42') allowing an insertion of a flap of the respective spanner plate (30, 30') to couple the spanner plate (30, 30') with the frame portion (40, 40').

10. The battery system according to any one of the preceding claims, wherein the first spanner plate (30) and the second spanner plate (30') are formed to respectively comprise two vertically extending depressions (35, 35') arranged so to form two common accommodation spaces (50-1, 50-2) displaced from each other along the interface (70); and
a first and a second rotation spanner members (60-1, 60-2) are respectively positioned in a corresponding common accommodation space (50-1, 50-2).

11. A method of assembling a battery system according to claim 1, wherein the method comprises the steps of:
a) inserting (S100) a first battery module (20) and a second battery module (20') into a housing (10), wherein the first battery module (20) and the second battery module (20') each comprise a plurality of battery cells (22, 22'),
the first battery module (20) comprises a first spanner plate (30) and the second battery module (20') comprises a second spanner plate (30') on at least one among a plurality of side portions of the battery modules (20, 20'), wherein the first battery module (20) and the second battery module (20') are arranged so that the first spanner plate (30) and the second spanner plate (30') form an interface (70) between each other, and
wherein the first spanner plate (30) and the second spanner plate (30') are formed to respectively comprise at least one vertically extending depression (35, 35') facing each other to form at least one common accommodation space (50-1, 50-2);
b) providing (S110) a rotation spanner member (60-1, 60-2) in the respective common accommodation space (50-1, 50-2), wherein a cross section (62) of the rotation spanner member (60-1, 60-2) has an elongation (67) in an elongation direction (ED), such that the elongation direction (ED) of the cross section (62) is parallel to the interface (70) between the first and second battery module (20, 20');
c) rotating (S120) at least one rotation spanner member (60-1, 60-2) into a state where the elongation direction (ED) of the cross section (62) is perpendicular to the interface (70) to exert an elastic pressing force onto the first and second battery module (20, 20') to press-fit the first and second battery module (20, 20') in the housing (10).

12. The method for assembling according to claim 11, wherein the first spanner plate (30) and the second spanner plate (30') are formed to respectively comprise two vertically extending depressions (35, 35') arranged so to form two common accommodation spaces (50-1, 50-2) displaced from each other along the interface (70); and a first and a second rotation spanner members (60-1, 60-2) are respectively positioned in a corresponding common accommodation space (50-1, 50-2), wherein the step of rotating (S120) comprises:
rotating the first and second rotation spanner member (60-1, 60-2) in opposite direction.

13. A method for disassembling a battery system, wherein the method comprises the steps of:
a) providing (S200) a battery system (100) as defined in any of the preceding claims 1 to 10;
b) rotating (S210) the at least one rotation spanner member (60-1, 60-2) so that the elongation direction (ED) is parallel to the interface (70)
c) removing (S220) the rotation spanner member (60-1, 60-2) from the respective common accommodation space (50-1, 50-2); and
d) removing (S230) at least one among the first battery module (20) and the second battery module (20') from the housing (10).

14. The method for disassembling the battery system of claim 13, when dependent on claim 10, wherein the step or rotating comprises rotating the first and second rotation spanner member (60-1, 60-2) in opposite direction.

15. A vehicle including a battery system (100) according to any one of the preceding claims 1 to 10.

## Amended claims

### Amended claims in accordance with Rule 137(2) EPC.

1. A battery system (100), comprising:
a first battery module (20) and a second battery module (20') inserted in a housing (10), wherein the first battery module (20) and the second battery module (20') each comprise a plurality of battery cells (22, 22');
the first battery module (20) comprises a first spanner plate (30) and the second battery module (20') comprises a second spanner plate (30') on at least one among a plurality of side portions of the battery modules (20, 20'), wherein the first battery module (20) and the second battery module (20') are arranged so that the first spanner plate (30) and the second spanner plate (30') form an interface (70) between each other;
**characterized in that**,
the first spanner plate (30) and the second spanner plate (30') respectively comprise at least one depression (35, 35') extending in a height direction of the battery modules (20, 20') and facing each other to form at least one common accommodation space (50-1, 50-2);
wherein in the at least one common accommodation space (50-1, 50-2) a rotation spanner member (60-1, 60-2) is positioned extending in the height direction of the battery modules (20, 20') in the respective common accommodation space (50-1, 50-2), wherein a cross section (62) of the rotation spanner member (60-1, 60-2) has an elongation (67) in an elongation direction (ED); and
the rotation spanner member (60-1, 60-2) is oriented such that the elongation direction (ED) of the cross section (62) is perpendicular to the interface (70) to exert an elastic pressing force onto the first and second battery module (20, 20') to press-fit the first and second battery module (20, 20') in the housing (10).

2. The battery system according to claim 1, wherein the cross section (62) is formed to comprise curved portions (64) between two elongation end portions (66).

3. The battery system according to claim 2, wherein the elongation end portions (66) are flat and extend perpendicular to the elongation direction (ED).

4. The battery system according to any one of the claims 1 to 3, wherein the at least one depression (35, 35') is formed between two protruding portions (37) of the respective spanner plate (30, 30'), wherein the depression (35, 35') comprises a flat portion (39) between the protruding portions (37).

5. The battery system according to claim 4, when dependent on claim 3, wherein the flat portion (39) of the depression (35, 35') abuts the flat elongation end portion (66) of the rotation spanner member (60-1, 60-2).

6. The battery system according to any one of the preceding claims, wherein the at least one depression (35, 35') is formed between flat plate portions (32, 32') of the respective spanner plate (30, 30'), wherein a depression gap (80) is provided between at least one depression (35, 35') and a plane (82) defined by the flat plate portions (32) of the respective spanner plate (30, 30').

7. The battery system according to any one of the preceding claims, wherein the first battery module (20) and the second battery module (20') comprise a plurality of frame portions (40, 40'), wherein the respective spanner plate (30, 30') forms at least one of the plurality of frame portions (40, 40').

8. The battery system according to claim 7, wherein at least one among the frame portions (40, 40') comprise a slit (42, 42') allowing an insertion of a flap of the respective spanner plate (30, 30') to couple the spanner plate (30, 30') with the frame portion (40, 40').

9. The battery system according to any one of the preceding claims, wherein the first spanner plate (30) and the second spanner plate (30') are formed to respectively comprise two depressions (35, 35') extending in the height direction of the battery modules (20, 20') arranged so to form two common accommodation spaces (50-1, 50-2) displaced from each other along the interface (70); and
a first and a second rotation spanner members (60-1, 60-2) are respectively positioned in a corresponding common accommodation space (50-1, 50-2).

10. A method of assembling a battery system according to claim 1, wherein the method comprises the steps of:
a) inserting (S100) a first battery module (20) and a second battery module (20') into a housing (10), wherein the first battery module (20) and the second battery module (20') each comprise a plurality of battery cells (22, 22'),
the first battery module (20) comprises a first spanner plate (30) and the second battery module (20') comprises a second spanner plate (30') on at least one among a plurality of side portions of the battery modules (20, 20'), wherein the first battery module (20) and the second battery module (20') are arranged so that the first spanner plate (30) and the second spanner plate (30') form an interface (70) between each other, and wherein the first spanner plate (30) and the second spanner plate (30') are formed to respectively comprise at least one depression (35, 35') extending in a height direction of the battery modules (20, 20') and facing each other to form at least one common accommodation space (50-1, 50-2);
b) providing (S110) a rotation spanner member (60-1, 60-2) in the respective common accommodation space (50-1, 50-2) extending in the height direction of the battery modules (20, 20'), wherein a cross section (62) of the rotation spanner member (60-1, 60-2) has an elongation (67) in an elongation direction (ED), such that the elongation direction (ED) of the cross section (62) is parallel to the interface (70) between the first and second battery module (20, 20');
c) rotating (S120) at least one rotation spanner member (60-1, 60-2) into a state where the elongation direction (ED) of the cross section (62) is perpendicular to the interface (70) to exert an elastic pressing force onto the first and second battery module (20, 20') to press-fit the first and second battery module (20, 20') in the housing (10).

11. The method of assembling the battery system according to claim 10, wherein the first spanner plate (30) and the second spanner plate (30') are formed to respectively comprise two vertically extending depressions (35, 35') arranged so to form two common accommodation spaces (50-1, 50-2) displaced from each other along the interface (70); and a first and a second rotation spanner members (60-1, 60-2) are respectively positioned in a corresponding common accommodation space (50-1, 50-2), wherein the step of rotating (S120) comprises:
rotating the first and second rotation spanner member (60-1, 60-2) in opposite direction.

12. A method of disassembling a battery system, wherein the method comprises the steps of:
a) providing (S200) a battery system (100) as defined in any of the preceding claims 1 to 9;
b) rotating (S210) the at least one rotation spanner member (60-1, 60-2) so that the elongation direction (ED) is parallel to the interface (70)
c) removing (S220) the rotation spanner member (60-1, 60-2) from the respective common accommodation space (50-1, 50-2); and
d) removing (S230) at least one among the first battery module (20) and the second battery module (20') from the housing (10).

13. The method of disassembling the battery system of claim 12, when dependent on claim 9, wherein the step or rotating comprises rotating the first and second rotation spanner member (60-1, 60-2) in opposite direction.

14. A vehicle including a battery system (100) according to any one of the preceding claims 1 to 9.
